Europäisches Patentamt

European Patent Office

Office européen des brevets

(19)

(11) **EP 1 407 938 A1**

(12) **DEMANDE DE BREVET EUROPEEN**

(43) Date de publication:
**14.04.2004 Bulletin 2004/16**

(51) Int Cl.⁷: **B60R 16/02**

(21) Numéro de dépôt: **03292509.1**

(22) Date de dépôt: **10.10.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **10.10.2002 FR 0212579**

(71) Demandeur: **Renault s.a.s.**
**92100 Boulogne Billancourt (FR)**

(72) Inventeurs:
• **Barbet, Frédéric**
**78000 Versailles (FR)**

• **Cheaib, Medhi**
**91440 Bures sur Yvette (FR)**
• **Jaafari, Alain**
**80330 Cagny (FR)**

(74) Mandataire: **Davies, Owen Robert Treharne et al**
**Renault,**
**1 avenue du Golf,**
**Sce 0267 TCR AVA 056**
**78288 Guyancourt (FR)**

(54) **Dispositif de couplage électrique sans contact entre deux parties mobiles d'un véhicule**

(57)     La présente invention concerne un dispositif de couplage électrique sans contact entre deux parties mobiles d'un véhicule.

La première partie (1) de véhicule et la seconde partie (2) de véhicule sont associés à une première partie électrique (3-8) et à une seconde partie électrique (9-12) du dispositif de couplage électrique sans contact de l'invention. De la sorte, une énergie d'alimentation électrique et des signaux peuvent être échangés sans contact et sans connecteur entre deux parties mobiles de véhicule comme une portière et la caisse du véhicule.

Fig. 1

EP 1 407 938 A1

## Description

La présente invention concerne un dispositif de couplage électrique sans contact entre deux parties mobiles d'un véhicule.

Dans l'état de la technique, on a décrit des situations dans lesquelles deux parties d'un véhicule sont mobiles l'une par rapport à l'autre comme une portière de véhicule et le reste de la carrosserie. Les équipements électriques de la portière doivent pouvoir être interconnectés au réseau électrique de bord pour remplir leurs fonctions grâce à l'emploi d'un chemin d'alimentation électrique et/ou de transmission de signaux électriques. A cette fin, un premier câble ou faisceau comportant des conducteurs réservés aux signaux et des conducteurs réservés à l'alimentation électrique est solidaire de la carrosserie tandis qu'un second câble ou faisceau comportant des conducteurs réservés aux signaux et des conducteurs réservés à l'alimentation électrique est solidaire de la portière. Les deux câbles sont interconnectés par un connecteur disposé à la frontière entre les deux parties du véhicule. Les supports de solidarisation des premier et second câbles ou faisceaux sont disposés de sorte que les mouvements relatifs de la portière sur le reste de la carrosserie ne soient pas gênés, ni que la fiabilité de l'interconnexion entre la portière et le reste de la carrosserie soit réduite.

Un inconvénient de ce genre de technique est que le connecteur est un composant dont la fiabilité est difficile et dont le montage est coûteux.

Un autre inconvénient est que, à cause de l'augmentation du nombre de charges électriques dans le véhicule, de moteurs électriques notamment et de contrôleurs électroniques, le nombre de fils des câbles d'interconnexion et la section des fils conducteurs pour la partie d'alimentation en énergie électrique de puissance augmente, ce qui entraîne une augmentation du coût de montage et du coût de maintenance.

Le document US-5515339A décrit un appareil pour la transmission sans fil d'énergie et de données avec un transformateur. Chaque enroulement du transformateur est connecté à un circuit pour contrôler et évaluer le cours d'une transmission d'énergie ou de signal. Lors de la transmission d'énergie du primaire vers le secondaire, on distingue une phase de charge magnétique (ESP) par le primaire puis une phase de libération de l'énergie dans le secondaire.

Le document US-6121692A décrit un appareil dans lequel un transformateur est prévu sur une colonne de direction. La tension primaire est découpée par un interrupteur de point froid. Au secondaire, l'énergie d'alimentation est reconstituée par un redresseur pleine onde. Les données sont échangées dans les deux sens. De plus, il est spécifié un mode de transfert d'énergie et un mode de transfert de données qui sont multiplexés.

Le document US-6091779A est un document du même genre que les documents US-5515339A et US-6121692A, dans lequel le transformateur n'est pas décrit.

Le document WO-9928152A décrit un transformateur qui coopère avec deux condensateurs de couplage d'ondes de communication.

La présente invention fournit un dispositif de couplage électrique sans contact entre deux parties mobiles d'un véhicule amélioré.

Le dispositif de l'invention se caractérise par le fait que le convertisseur comporte un pont en "H" dont les bras comportent deux condensateurs et deux interrupteurs commandés, la diagonale du pont comportant le primaire d'un transformateur de sorte que soit constitué un circuit résonnant comprenant la connexion en série d'un condensateur et d'une self d'inductance, représentatifs des caractéristiques électriques de la bobine d'induction, comme primaire du transformateur, ainsi que des condensateurs.

Il en résulte que le dispositif de l'invention permet d'alimenter la seconde partie de véhicule à l'aide notamment de la première partie de véhicule sans recourir à un connecteur.

Un des avantages de ce dispositif est qu'il permet d'utiliser une résonance au niveau du convertisseur AC/DC de la première partie de couplage.

D'autres avantages et caractéristiques de la présente invention seront mieux comprises à l'aide de la description et des figures annexées parmi lesquelles :

- la figure 1 est un schéma bloc du principe du dispositif de l'invention ;
- les figures 2 à 4 sont des schémas bloc de trois modes particuliers de réalisation du dispositif de l'invention ;
- les figures 5 à 7 sont des vues illustrant un mode particulier de réalisation d'un composant essentiel au dispositif de l'invention ;
- la figure 8 est un graphe expliquant une méthode de contrôle du dispositif de la figure 1 ;
- la figure 9 est un graphe illustrant l'effet sur des caractéristiques électriques du dispositif de l'invention d'une variation de position relative des deux parties de véhicule.

Selon l'invention, le connecteur disposé entre les deux organes à interconnecter est supprimé. Le dispositif de l'invention peut être disposé entre deux parties du véhicule même si l'une ou l'autre de ces parties ne joue aucun rôle dans l'échange de signaux ou d'alimentation électrique, mais peut ainsi permettre d'assurer la continuité d'un chemin d'interconnexion dans le véhicule par exemple quand l'une des parties est mobile par rapport au reste du véhicule comme c'est le cas pour une portière ou un capot. Particulièrement, quand le mouvement relatif des deux parties comporte une rotation, le dispositif de couplage de l'invention permet d'obtenir une information d'état sur le mouvement relatif des deux parties ou organes du véhicule.

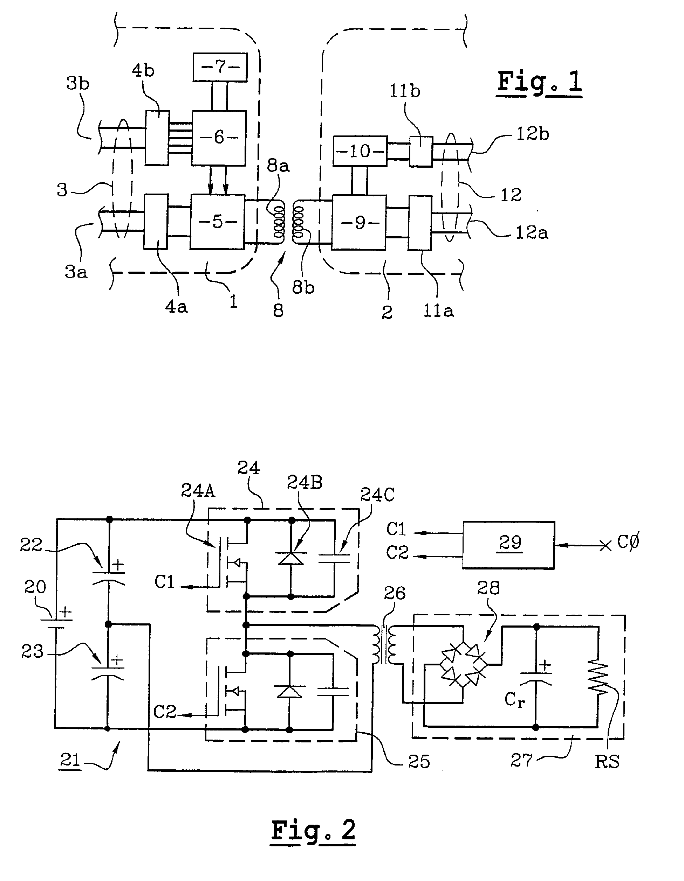

A la figure 1, on a représenté un mode de réalisation selon l'invention d'un dispositif de couplage électrique entre deux parties d'un véhicule en mouvements relatifs.

La première partie de véhicule 1, comme la carrosserie du véhicule, est associée à une première partie de couplage électrique 3 - 7. La seconde partie de véhicule 2, comme une portière du véhicule, est associée à une seconde partie de couplage électrique 9 - 12.

Les première et seconde parties de couplage électrique composent ensemble le dispositif de couplage électrique sans contact de l'invention.

Dans le mode de réalisation préféré, le dispositif de couplage électrique sans contact de l'invention est constitué autour d'un transformateur bobiné de sorte que le flux d'énergie sans contact soit un flux magnétique.

A la figure 1, on a représenté un faisceau électrique 3 solidaire de la première partie 1 du véhicule. Le faisceau électrique 3 comporte un premier ensemble de conducteurs 3a réservés au transport d'énergie électrique d'alimentation terminé par un bornier 4a solidaire du boîtier (non représenté) dans lequel est enfermé une partie du dispositif de l'invention. Le faisceau électrique 3 comporte un second ensemble de conducteurs 3b réservés au transport des signaux d'information terminé par un bornier 4b solidaire du boîtier non représenté dans lequel est enfermé une partie du dispositif de l'invention. Plus généralement, le bornier 4a constitue un récepteur d'énergie électrique d'alimentation pour la première partie électrique du dispositif de couplage de l'invention.

Dans le mode de réalisation préféré, l'énergie électrique d'alimentation est fournie par le réseau de bord sous la forme d'une tension continue référencée à la masse du véhicule. Pour permettre son transfert par l'intermédiaire d'un flux magnétique, le dispositif de couplage de l'invention, dans sa première partie électrique, comporte un convertisseur Continu/ alternatif (DC/AC) 5. Un tel circuit 5 peut être constitué par un onduleur de tension continue de sorte que sa sortie de conversion soit connectée aux bornes du primaire 8a d'un transformateur 8 inclus dans le boîtier du dispositif de couplage de l'invention. Les bornes d'entrée du convertisseur 5 sont donc reliées aux conducteurs convenables 3a du faisceau 3 sous tension continue.

La première partie de couplage électrique 3-7 comporte ensuite un modulateur 6 dont le circuit d'entrée est connecté par le bornier 4b aux conducteurs convenables du second ensemble 3b de conducteurs du faisceau 3. Le modulateur 6 est, le cas échéant piloté à l'aide d'un circuit de commande 7 et produit une tension alternative qui est injectée à un potentiel convenable sur le circuit de sortie du circuit convertisseur DC/AC 5 de sorte que la superposition des tensions variables issues du convertisseur 5 et du modulateur 6 soit connectée aux bornes du primaire 8a du transformateur 8. Plus généralement, le bornier 4b constitue un récepteur ou un récepteur/émetteur d'au moins un signal électrique porteur d'informations pour la première partie électrique du dispositif de couplage de l'invention.

De plus, le modulateur 6 comporte le cas échéant un circuit permettant de décoder les signaux transmis par la seconde partie de couplage électrique 9-12 quand cette dernière coopère avec un émetteur-récepteur de signaux d'informations. Le dispositif de couplage électrique sans contact de l'invention comporte alors des moyens assurant la réversibilité des échanges d'informations entre les premières 3-7 et seconde 9-12 parties électriques. La première partie électrique du dispositif de couplage permet ainsi de produire un flux d'énergie converti qui transporte à la fois l'alimentation électrique et les signaux porteurs d'information.

Le transformateur 8 comporte ensuite un secondaire 8B, dont les bornes sont connectées à des premières bornes d'un circuit convertisseur 9 de type alternatif/continu (AC/DC) dont une seconde paire de bornes est accessible par un bornier 1 la à la partie d'alimentation 12a du faisceau 12 solidaire de la seconde partie électrique du dispositif de couplage électrique de l'invention.

Dans un mode de réalisation, le convertisseur 9 comporte un convertisseur qui est contrôlé de manière à adapter l'énergie d'alimentation à la charge disposée sur le faisceau de sortie 12 qu'elle soit alternative ou continue.

Plus généralement, le bornier 11 a est un circuit producteur d'une énergie électrique d'alimentation connecté au convertisseur dudit flux d'énergie sans contact.

Connecté sur un potentiel convenable, un circuit démodulateur 10 prélève et met en forme au moins un signal porteur d'informations initialement modulé par le modulateur 6 de la première partie électrique de sorte que soit disponible à sa sortie sur un bornier 11b un signal porteur d'informations sur la partie « signal » 12b du faisceau 12 solidaire de la seconde partie électrique du dispositif de couplage électrique de l'invention.

Le cas échéant, si la seconde partie 2, à laquelle correspond la seconde partie électrique 9-12 du dispositif de couplage de l'invention, comporte des dispositifs producteurs de signaux à destination d'organes électriques ou informatiques de la première partie 1, le circuit démodulateur 10 est remplacé par un circuit démodulateur-modulateur et le circuit modulateur 6 est remplacé par un circuit modulateur-démodulateur ainsi qu'il a été évoqué plus haut. Plus généralement, le bornier 11 b est un émetteur ou un circuit émetteur/récepteur d'au moins un signal porteur d'informations.

A la figure 2, on a représenté un mode de réalisation préféré d'un dispositif de transmission d'énergie électrique entre deux organes d'un véhicule selon l'invention.

Une batterie 20 délivrant une tension électrique E est connectée à un pont en "H" 21 dont les bras comportent deux condensateurs 22 et 23 et deux interrupteurs commandés 24 et 25. Le pont en « H » 21 constitue le coeur du convertisseur DC/AC 5 décrit à la figure 1.

La diagonale du pont comporte le primaire d'un transformateur 26 de sorte que soit constitué un circuit résonnant comprenant la connexion en série d'un condensateur C0 et d'une self d'inductance L0, représentatifs des caractéristiques électriques de la bobine d'induction, qui est représentée à la figure 2 comme primaire d'un transformateur 26, équivalent du transformateur 8 décrit à l'aide de la figure 1, ainsi que des condensateurs 22 et 23.

Dans un mode préféré de réalisation, les interrupteurs commandés 24 et 25 sont commandés par des signaux de commande de commutation et/ou de mise en conduction contrôlée, respectivement C1 pour l'interrupteur 24 et C2 pour l'interrupteur 25. Les signaux de commande C1 et C2 de la mise en conduction et/ou de l'état de conduction des interrupteurs sont générés par un circuit de contrôle 29.

Dans un mode de réalisation, le circuit de contrôle 29 exécute un schéma de mise en conduction selon une fréquence déterminée à l'aide d'un signal de détection S0 produit par un capteur adapté de sorte que les paramètres électriques, courant et/ou tension, sur la charge connectée au delà du primaire du transformateur 26 soient déterminées à des valeurs de consigne.

Dans un mode de réalisation, chaque interrupteur commandé 24 ou 25 comporte un transistor de puissance de type MOS ou IGBT 24a dont le circuit de source comporte en parallèle, une diode 24b et un condensateur 24c. Diode et condensateur peuvent, le cas échéant être intégrés directement sur le composant semi conducteur.

Ainsi qu'il est connu dans l'état de la technique, l'onduleur constitué par les condensateurs 22 et 23 et les interrupteurs commandés 24 et 25 produit aux bornes de la bobine au primaire du transformateur 26 une tension alternative qui peut être modulée le cas échéant en lui superposant à l'aide du modulateur 6 (Figure 1) un signal d'information à destination de la seconde partie électrique du dispositif de couplage de l'invention.

Le secondaire du transformateur équivalent 26 présente une bobine qui correspond à la bobine 8b du dispositif de la figure 1, et dont les bornes sont connectées à une première diagonale d'un pont redresseur à diode 28 dont l'autre diagonale est connectée à un circuit régulateur qui ici est réduit à l'existence d'une simple capacité Cr connectée en parallèle avec la charge Rs au niveau de la seconde partie de véhicule 2 (figure 1). Ce circuit disposé au secondaire constitue un convertisseur AC/DC comme mode particulier de réalisation du convertisseur 9 (Figure 1).

Dans un mode de réalisation, la commande de l'état de conduction des interrupteurs commandés 24 et 25 de la figure 2 est réalisée à l'aide d'une structure de commutation duale 29 de sorte que, en cas de défaillance du signal de contrôle, les deux interrupteurs sont ouverts, ce qui permet d'assurer un fonctionnement sûr du dispositif de transmission d'énergie électrique de l'invention. A cet effet, un signal d'horloge S0 est fourni en entrée du contrôleur 29 qui fournit deux signaux de commande de commutation C1 et C2 respectivement aux interrupteurs 24 et 25.

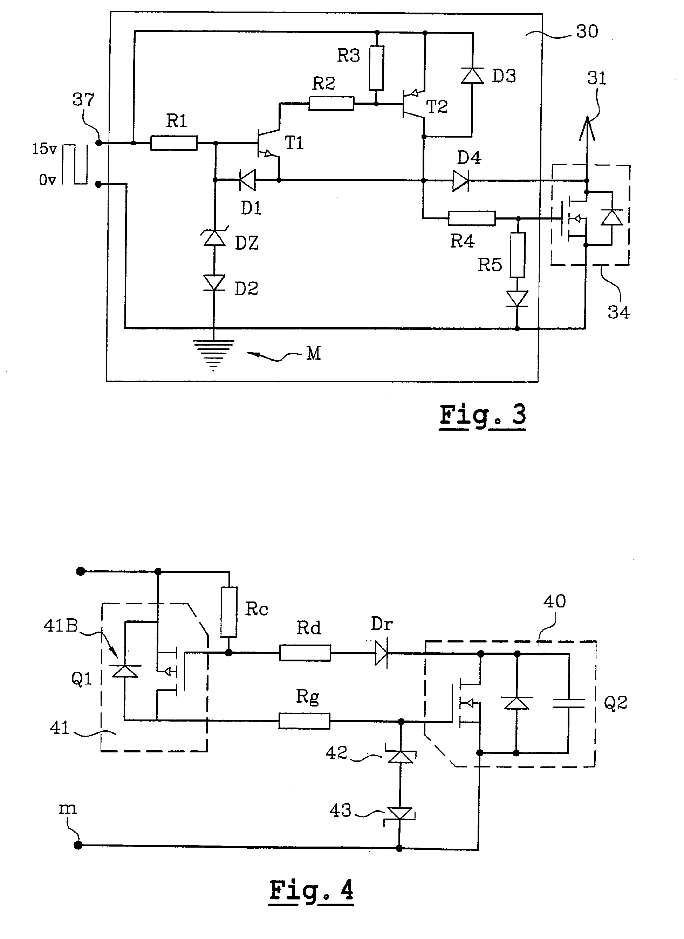

Dans un mode de réalisation d'un circuit de contrôle 29, représenté à la figure 3, pour un interrupteur commandé 34 (qui peut être l'interrupteur 24 ou l'interrupteur 25 du convertisseur AC/DC du dispositif de couplage de la figure 2, un signal « carré » pilote est fourni aux bornes 37 d'entrée du circuit de contrôle 29. Une résistance R1 assure la liaison à la base d'un transistor NPN T1 dont le circuit émetteur-base comporte une diode D1 dont la cathode est connectée à la base et à une série de deux diodes tête-bêche DZ de type Zener et D2 de conduction qui sont aussi connectées à la masse M du contrôleur 29. Un transistor T2 PNP est monté avec deux résistances R2 et R3 en pseudo-Darlington avec le collecteur de T1, une diode D3 connectée entre émetteur et collecteur de T2 évite le blocage de T2. Le collecteur de T2 est connecté à l'électrode de commande de l'interrupteur 34 par l'intermédiaire d'un pont diviseur résitif R4, R5. La résistance R5 peut être complétée par une diode électroluminescente comme témoin de fonctionnement du contrôleur. L'interrupteur 34 est par ailleurs connecté sur son chemin de puissance entre un point chaud 31 et la masse M.

Le signal de contrôle 37 est produit par un générateur commandable d'un signal à fréquence variable dont la fréquence fait varier, ainsi qu'il sera décrit plus loin, la puissance transmise par le dispositif de l'invention.

Un tel circuit oscillateur (non représenté) est bien connu et sa fréquence peut être commandée à l'aide d'un contrôleur ou d'un microcontrôleur programmé, ou bien d'une commande manuelle.

Le système de commande produit à l'aide du signal de contrôle 37 est réalisé dans trois modes de comportements fréquentiels différents.

La fréquence de résonance Fr du dispositif onduleur permet de déduire un premier mode de fonctionnement pour une fréquence de découpage comprise dans une première bande, en dessous de la moitié de la fréquence de résonance, un second mode de fonctionnement dans une seconde bande entre la moitié de la fréquence de résonance et la fréquence de résonance et un troisième mode de fonctionnement au-delà de la fréquence de résonance.

Pour toutes les fréquences de découpage inférieures à la fréquence de résonance (F<Fr), l'impédance du circuit résonnant représenté à la figure 2 est capacitive, ce qui signifie que le courant dans l'inductance est en avance de phase par rapport à la phase du fondamental de la tension de l'onduleur.

Cette situation permet de travailler en convertisseur à zéro de courant (CZC) qui permet l'usage du thyristor comme interrupteur car dans ce mode de fonctionnement l'ouverture du thyristor est spontanée.

Si la fréquence de découpage est inférieure à $\frac{Fr}{2}$, le mode de fonctionnement est dit en conduction discontinue, le courant s'interrompant dans le circuit résonnant boC.

La commutation sur les deux interrupteurs 24, 25 (figure 2) se fait toujours à 0 de courant en mode CZC.

Pour des fréquences de découpage supérieures à la fréquence de résonance, la conduction est continue et le courant est en retard de phase par rapport à la fondamentale de la tension d'alimentation de l'onduleur, ce qui facilite la commutation à 0 de tension qui doit être alors commandée à l'ouverture en mode CZC.

Dans ce cas, à la place du thyristor, on peut utiliser des composants IGBT ou des transistors Mos pour réaliser les interrupteurs 24 et 25.

A la figure 4 qui illustre un second mode de réalisation du circuit 29, on a représenté la configuration de la commande quand la fréquence de découpage est au-delà de la fréquence de résonance.

Dans ce cas, les interrupteurs sont réalisés à l'aide de transistors Mos Q1 et Q2.

Dans le mode de fonctionnement dual, le transistor Q1 est un transistor Nmos de type P qui présente une diode de conduction antiparallèle 41 b tandis que le transistor Q2 est un transistor du type MOS avec une diode parallèle.

La grille du transistor Q2 est connectée à la masse d'alimentation m par l'intermédiaire de deux diodes Zener 42 et 43 montées tête-bêche.

La grille du transistor Nmos Q2 est connectée à la source du transistor Q1 par l'intermédiaire d'une résistance Rg, tandis que le drain du transistor Q2 est connecté à la grille du transistor Q1 par l'intermédiaire d'une résistance Rd en série avec une diode de roue libre Dr.

Une résistance de charge Rc est connectée entre la grille et la source du transistor Q1.

La diode Dr entre en conduction lorsque la tension Vdf aux bornes du transistor Q2 devient nulle.

Sa mise en conduction place un courant à travers le transistor Q1 qui est alors agencé de manière à acheminer l'ordre de commande à la grille du transistor Q2.

Lorsque le transistor Q2 se bloque, la diode en antiparallèle sur le transistor Q1 permet de bloquer à son tour le transistor Q1.

Les deux diodes Zener 42 et 43 assurent une protection de la grille du transistor Q2 contre une éventuelle surtension.

La commande séquentielle est réalisée à l'aide d'un transformateur d'impulsion (non représenté) qui génère un signal alternatif, par exemple sous forme d'une onde carrée antre + et -, 20 Volts dans le cas d'une alimentation à 42 Volts.

Dans un mode de réalisation, la boucle magnétique est réalisée à l'aide d'un transformateur à air, constituée de deux bobines superposées et isolées l'une de l'autre.

Les deux bobines peuvent se retrouver selon les mouvements relatifs des deux organes à une certaine distance l'une de l'autre.

Dans ce type de montage, le flux de dispersion induit par la bobine n'étant pas canalisé, il existe un risque d'échauffement des partis métalliques voisines des bobines.

Dans un autre mode de réalisation, les deux bobines sont montées sur un noyau magnétique, ce qui permet d'augmenter l'inductance magnétisante du transformateur.

Dans un autre mode de réalisation, le montage comporte dix spires pour la première bobine et quatre spires pour la deuxième bobine avec un entrefer d'une épaisseur d'environ 1,5 millimètres.

Dans un mode de réalisation, avec un coefficient de surtension élevé, on parvient à transmettre une puissance de 71 Watts.

Dans un autre mode de réalisation, le circuit résonant L0, C0 a été dimensionné de façon à présenter un coefficient de surtension compris entre 1 et 3.

Dans un autre mode de réalisation, la valeur L0 était très proche de l'inductance de fuite du transformateur équivalent qui réalisé à l'aide des deux bobines et du noyau magnétique.

On est parvenu à produire une puissance de transmission de 111 Watts avec une valeur crête du courant dans le circuit oscillant et une tension dans le condensateur C0 inférieur à ceux des autres cas.

Dans ce mode de réalisation, le coefficient de surtension est choisi entre 1,5 et 2.

Dans ce mode de réalisation, les interrupteurs utilisés présentent une faible résistance de source pour réduire les pertes par conduction et éviter un écart trop important.

Dans une application, la seconde partie de véhicule est constituée par une portière de véhicule et dont la charge électrique est essentiellement résistive. La première partie de véhicule est alors constituée par la caisse du véhicule proprement dit.

Le transformateur magnétique est réalisé ainsi qu'il a été décrit ci-dessus à l'aide d'un noyau magnétique associé à la charnière de la portière, les deux bobines étant respectivement montées autour de ce noyau magnétique.

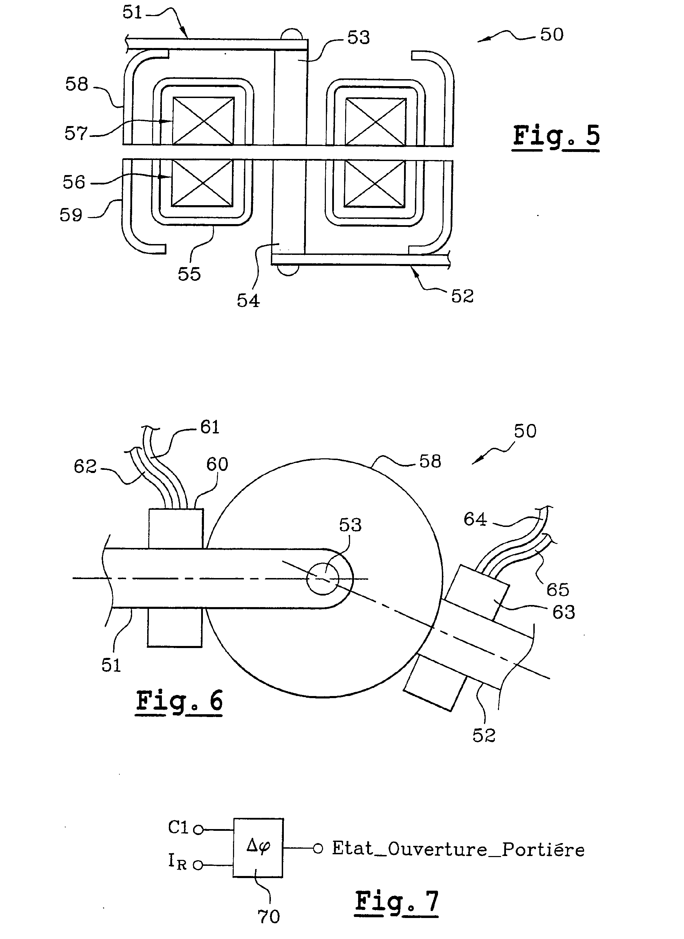

Aux figures 5 et 6, on a représenté un schéma de principe d'une telle réalisation. La figure 5 est une vue en coupe schématique d'un tel principe. Le transformateur électrique central du dispositif de l'invention comporte un noyau magnétique creux 55 de forme sensiblement cylindrique et dont l'axe central est aligné sur l'axe de charnière de la portière considérée comme seconde partie de véhicule.

Le noyau magnétique 55 est dans un mode de réalisation, directement intégré à au moins une charnière de portière.

Le noyau magnétique 55 est dans un mode de réalisation, réalisé sur un support séparé des charnières de la portière mais de sorte que son axe soit aligné avec l'axe de rotation de la portière dans toute position de la portière.

Un bras 51 porte un arbre 53 qui pénètre dans le noyau creux 55 et est solidaire de la première partie de véhicule comme la caisse du véhicule. Le bras 51 est aussi solidaire d'un carter 58 qui entoure et protège une bobine électrique 57 qui sert de primaire (comme 8a, Figure 1) au dispositif de couplage électrique de l'invention.

Un bras 52 porte un arbre 54 qui pénètre dans le noyau creux 55 et est solidaire de la seconde partie de véhicule comme une portière du véhicule. Le bras 54 est aussi solidaire d'un carter 59 qui entoure et protège une bobine électrique 56 qui sert de secondaire (comme 8b, Figure 1) au dispositif de couplage électrique de l'invention.

A la figure 6 qui est sensiblement une vue de dessus de la vue de la figure 5, les mêmes éléments que ceux de la figure 5 portent les mêmes numéros de référence. On y a rajouté un bornier 60 solidaire du bras 51 qui reçoit les parties 61 et 62 de faisceau électrique solidaire de la première partie de véhicule et un bornier 63 solidaire du bras 52 qui reçoit les parties 64 et 65 de faisceau électrique solidaire de la seconde partie de véhicule. De la sorte, un dispositif de couplage électrique ainsi constitué, monté sur l'axe de rotation d'ouverture d'une portière de véhicule permet d'alimenter et d'échanger les signaux de commande et de contrôle entre les organes électriques de la portière comme un lève-vitre et/ou une serrure électrique, ou encore une lampe de signalisation d'ouverture de la portière, ou encore un rétroviseur motorisé avec le réseau de bord du véhicule. On conçoit ainsi l'avantage de l'invention de réduire les difficultés de réalisation de la connexion des ces charges électriques sur le réseau de bord.

A la figure 7, on a représenté le schéma de principe d'un circuit électrique supplémentaire associé au dispositif de couplage électrique de l'invention. En effet, on s'est aperçu que, lorsque les première et seconde parties de véhicule étaient en mouvements relatifs l'une par rapport à l'autre, en rotation dans l'application illustrée aux figures 5 et 6, il était possible d'effectuer une mesure de leur position relative en détectant seulement deux paramètres électriques sur le dispositif de couplage électrique de l'invention. A cette fin, deux paramètres ont été identifiés qui sont :

- le courant résonnant IR sur le convertisseur DC/AC 5 et
- la tension de commande C1 de l'un des deux interrupteurs commandés du convertisseur DC/AC 5 ;

permettent de reconstruire la position relative de la portière et de la caisse du véhicule en utilisant un transformateur selon l'enseignement décrit aux figures 5 et 6.

Dans un mode de réalisation, la fonction permettant de mesurer l'angle d'ouverture de la portière Etat_Ouverture_Portière est constituée par la mesure du déphasage temporel entre le courant résonnant IR et la tension de commande C1 de l'un des interrupteurs commandés 24 ou 25. A cette fin, un circuit 70 de mesure de déphasage est prévu sur la première partie électrique du dispositif de couplage électrique de l'invention à la sortie duquel est disponible une tension Etat_Ouverture_Portière représentative du degré ou de l'angle d'ouverture de la portière. Il est ainsi possible de s'affranchir de l'obligation réglementaire de disposer un interrupteur de détection d'ouverture de portière qu'il n'est en particulier plus nécessaire de câbler séparément des autres composants de portières, ce qui apporte une simplification notable dans le montage d'un véhicule.

Un circuit 70 de mesure de déphasage est réalisé de manière connue sur la base d'un circuit multiplieur.

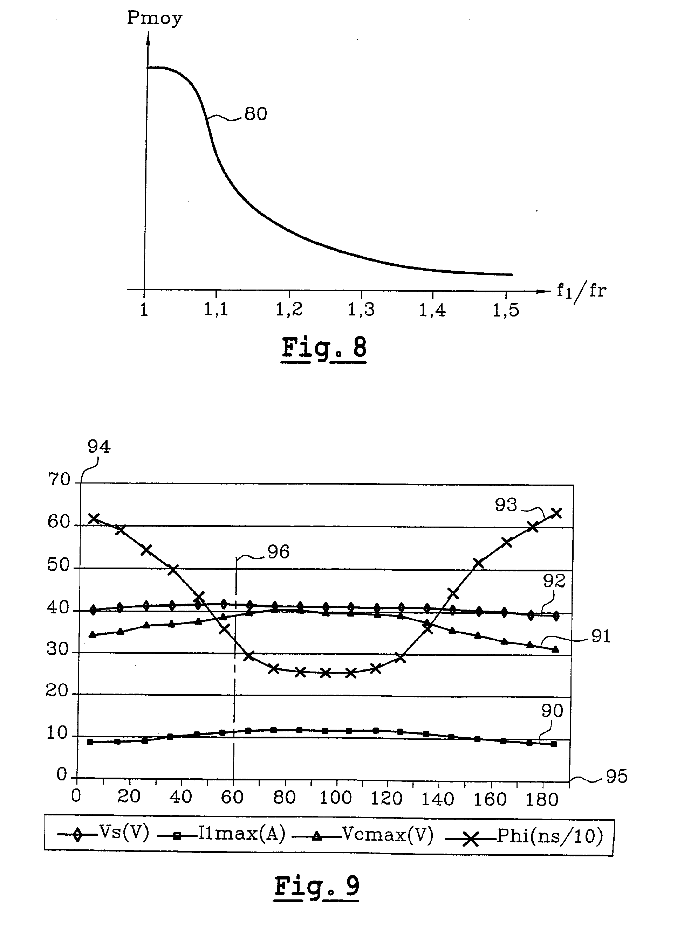

A la figure 8, on a représenté un graphe de la variation de puissance transmise à l'aide du dispositif de couplage électrique de l'invention en fonction de la fréquence du circuit de pilotage S0 du contrôleur 29 (Figure 2). Une telle courbe permet, en fonction des puissances nécessaires de déterminer la fréquence de pilotage C0 sur la base de la fréquence de résonance du montage de la figure 2. S'il est nécessaire de moduler cette puissance, un contrôleur de pilotage 29 comporte une mémoire de la courbe 80 caractéristique représentée à la figure 8 et une mémoire de la fréquence de résonance fr caractéristique du montage, pour produire une fréquence f de pilotage aux bornes 37 du circuit de pilotage des interrupteurs du convertisseur DC/AC 5.

A la figure 9, on a représenté les différents signaux que l'on peut détecter sur le montage. En abscisse 95, on a représenté l'angle fait entre les deux bobines 8A et 8B dans la structure représenté aux figures 5 et 6. En ordonnée 94, on a représenté la puissance transmise.

La courbe 90 représente la variation du courant en fonction de l'angle de la portière, la courbe 91 représente la tension maximum produite en fonction de l'ouverture de la portière, la courbe 92 représente la tension aux bornes de la première bobine, la courbe 93 représente le déphasage entre le courant résonant et la tension de commande du transistor.

On s'est aperçu que le déphasage décroissait entre 0 et 60°, restait sensiblement constant entre 60 et 120° et revenait à la valeur nominale de 60 à 180°. On constate ainsi qu'il est possible en mesurant le signal de déphasage précité 93 d'en déduire la valeur de l'angle de la portière.

Le dispositif de l'invention comporte alors un circuit détecteur de la phase entre le courant résonnant et la tension de commande du transistor, qui produit un signal booléen d'ouverture de porte quand le signal de déphasage se trouve dans une gamme prédéterminée de valeurs.

**Revendications**

1. Dispositif de couplage électrique sans contact entre au moins deux parties (1, 2) en mouvements relatifs d'un véhicule, qui comporte :

   - une première partie de couplage électrique (3 - 7) ;
   - une seconde partie de couplage électrique (9-12) associée à l'une (2) des deux parties du véhicule en mouvements relatifs ;

   de sorte que la partie de véhicule (2) associée à la seconde partie de couplage électrique puisse être alimentée en énergie électrique d'alimentation et recevoir ou recevoir et émettre au moins un signal porteur d'informations relatives au fonctionnement de ladite partie de véhicule ;

   - un transformateur bobiné de sorte que le couplage soit un couplage magnétique, l'énergie électrique d'alimentation étant fournie par le réseau de bord sous la forme d'une tension continue référencée à la masse du véhicule à un convertisseur Continu/ alternatif (5) de sorte que sa sortie de conversion soit connectée aux bornes du primaire (8a) du transformateur (8),

   **caractérisé en ce que**

   le convertisseur (5) comporte un pont en "H" (21) dont les bras comportent deux condensateurs (22, 23) et deux interrupteurs commandés (24, 25), la diagonale du pont comportant le primaire d'un transformateur (26) de sorte que soit constitué un circuit résonnant comprenant la connexion en série d'un condensateur (C0) et d'une self d'inductance (L0), représentatifs des caractéristiques électriques de la bobine d'induction, comme primaire du transformateur (26), ainsi que des condensateurs (22 et 23).

2. Dispositif selon la revendication 1, **caractérisé en ce qu'**il comporte un modulateur (6) dont le circuit d'entrée est connecté par le bornier (4b) aux conducteurs convenables du second ensemble (3b) de conducteurs du faisceau (3), le cas échéant piloté à l'aide d'un circuit de commande (7) et qui produit une tension alternative qui est injectée à un potentiel convenable sur le circuit de sortie du circuit convertisseur (5) de sorte que la superposition des tensions variables issues du convertisseur (5) et du modulateur (6) soit connectée aux bornes du primaire (8a) du transformateur (8).

3. Dispositif selon la revendication 2, **caractérisé en ce que** le modulateur (6) comporte le cas échéant un circuit permettant de décoder les signaux transmis par la seconde partie de couplage électrique (9-12) quand cette dernière coopère avec un émetteur-récepteur de signaux d'informations, le dispositif de couplage électrique sans contact de l'invention comportant alors des moyens assurant la réversibilité des échanges d'informations entre les première (3-7) et seconde (9-12) parties électriques.

4. Dispositif selon la revendication 1, **caractérisé en ce que** le transformateur (8) comporte ensuite un secondaire (8B) associé à ladite seconde partie de couplage électrique (9 -12) et dont les bornes sont connectées à des premières bornes d'un circuit convertisseur (9) de type alternatif/continu (AC/DC) dont une seconde paire de bornes est accessible par un bornier (11a) à la partie d'alimentation (12a) du faisceau (12) solidaire de la seconde partie électrique du dispositif de couplage électrique de l'invention.

5. Dispositif selon la revendication 4, **caractérisé en ce que** le convertisseur (9) comporte un convertisseur continu-continu qui est contrôlé de manière à adapter l'énergie d'alimentation à la charge disposée sur le faisceau de sortie (12).

6. Dispositif selon la revendication 4, **caractérisé en ce que** ladite seconde partie de couplage électrique (9 -12) comporte aussi un circuit démodulateur (10) qui prélève et met en forme au moins un signal porteur d'informations initialement modulé par le modulateur (6) de la première partie électrique de sorte que soit disponible à sa sortie sur un bornier (1 1 b) un signal porteur d'informations sur la partie « signal » (12b) du faisceau (12) solidaire de la seconde partie électrique.

7. Dispositif selon la revendication 3 ou 6, **caractérisé en ce que** il comporte un circuit démodulateur-modulateur (10) et un circuit modulateur-démodulateur (6).

8. Dispositif selon la revendication 1, **caractérisé en ce que** les interrupteurs commandés (24, 25) sont commandés par des signaux de commande (C1, C2) générés par un circuit de contrôle (29) qui 9 exécute un schéma de mise en conduction selon une fréquence déterminée à l'aide d'un signal de détection (S0) produit par un capteur adapté de sorte que les paramètres électriques, courant et/ou tension, sur la charge connectée au delà du primaire du transformateur soient déterminées à des valeurs de consigne.

9. Dispositif selon la revendication 1, **caractérisé en ce que** chaque interrupteur commandé (24 ou 25) comporte un transistor de puissance de type MOS ou IGBT (24a).

**10.** Dispositif selon la revendication 1, **caractérisé en ce que** le secondaire du transformateur (26) présente une bobine (8b ; figure 1) dont les bornes sont connectées à une première diagonale d'un pont redresseur à diodes (28) dont l'autre diagonale est connectée à un circuit régulateur (Cr, Rs).

**11.** Dispositif selon la revendication 8, **caractérisé en ce que** la commande de l'état de conduction des interrupteurs commandés (24 et 25) est réalisée à l'aide d'une structure de commutation duale (29) de sorte que, en cas de défaillance du signal de contrôle, les deux interrupteurs sont ouverts, un signal d'horloge (S0) étant fourni en entrée du contrôleur (29) qui fournit deux signaux de commande de commutation (C1, C2) respectivement aux interrupteurs (24, 25).

**12.** Dispositif selon la revendication 8, **caractérisé en ce que**, pour un interrupteur commandé (34), un signal « carré » pilote est fourni aux bornes (37) d'entrée du circuit de contrôle (29) comportant un pseudo-Darlington (T1, T2) , le signal de contrôle (37) étant produit par un générateur commandable d'un signal à fréquence variable dont la fréquence fait varier la puissance transmise.

**13.** Dispositif selon la revendication 12, **caractérisé en ce que** le générateur commandable travaille dans un parmi trois modes de comportements fréquentiels différents :

- une fréquence de découpage comprise dans une première bande, en dessous de la moitié de la fréquence de résonance,
- une fréquence de découpage comprise dans une seconde bande entre la moitié de la fréquence de résonance et la fréquence de résonance et
- une fréquence de découpage comprise au-delà de la fréquence de résonance.

**14.** Dispositif selon l'une quelconque des revendications précédentes, **caractérisé en ce que** le transformateur (26) est un transformateur à air, constitué de deux bobines superposées et isolées l'une de l'autre.

**15.** Dispositif selon la revendication 14, **caractérisé en ce que** les deux bobines sont montées sur un noyau magnétique.

**16.** Dispositif selon la revendication 1, **caractérisé en ce que** une première partie de véhicule (1), comme la carrosserie du véhicule, est associée à ladite première partie de couplage électrique (3 - 7) et **en ce que** la seconde partie de véhicule (2), comme une portière du véhicule, est associée à ladite seconde partie de couplage électrique (9 - 12).

**17.** Dispositif selon la revendication 16, **caractérisé en ce que** le transformateur magnétique est réalisé à l'aide d'un noyau magnétique associé à la charnière de la portière, les deux bobines étant respectivement montées autour de ce noyau magnétique.

**18.** Dispositif selon l'une des revendications précédentes, **caractérisé en ce qu'**il coopère avec un circuit électrique (70) effectuant une mesure de la position relative des première (1) et seconde (2) parties de véhicule en mouvements relatifs en détectant seulement deux paramètres électriques sur le dispositif de couplage électrique.

**19.** Dispositif selon la revendication 18, **caractérisé en ce que** les deux paramètres de calcul sont :

- le courant résonant (IR) sur le convertisseur DC/AC (5) et
- la tension de commande (C1) de l'un des deux interrupteurs commandés du convertisseur DC/AC (5) ;

permettent de reconstruire la position relative des première (1) et seconde (2) parties de véhicule.

**20.** Dispositif selon la revendication 19, **caractérisé en ce que** la première partie (1) de véhicule est une caisse de véhicule et la seconde (2) partie de véhicule est une portière de véhicule, le circuit électrique (70) produisant un signal représentatif de l'angle d'ouverture de la portière (Etat_Ouverture_Portière) sur la base de la mesure du déphasage temporel entre le courant résonnant (IR) et la tension de commande (C1) de l'un des interrupteurs commandés (24 ou 25), le circuit (70) de mesure de déphasage comportant un circuit multiplieur.

**21.** Dispositif selon la revendication 19, **caractérisé en ce que** le circuit de contrôle (29) comporte une mémoire de la courbe (80) caractéristique du convertisseur (5) et une mémoire de la fréquence de résonance (fr) caractéristique du montage, pour produire une fréquence f de pilotage aux bornes (37) du circuit de pilotage des interrupteurs du convertisseur DC/AC (5) en fonction des besoins de puissance de la dite seconde partie (2) de véhicule.

Fig. 1

Fig. 2

<u>**Fig. 3**</u>

<u>**Fig. 4**</u>

**Fig. 5**

**Fig. 6**

C1 —○
$I_R$ —○
$\Delta\varphi$ —○ Etat_Ouverture_Portiére

**Fig. 7**

**Fig. 8**

**Fig. 9**

# EP 1 407 938 A1

**Office européen des brevets**

## RAPPORT DE RECHERCHE EUROPEENNE

Numéro de la demande

EP 03 29 2509

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 5 515 399 A (SWART MARTEN) 7 mai 1996 (1996-05-07) * le document en entier * --- | 1-3,6-8 | B60R16/02 |
| Y | US 6 091 779 A (GRIESSBACH ROBERT) 18 juillet 2000 (2000-07-18) | 1-3,6-8 | |
| A | * le document en entier * --- | 9-15,17 | |
| A | US 6 121 692 A (REA IRVIN B ET AL) 19 septembre 2000 (2000-09-19) * le document en entier * --- | 1-3,5-11 | |
| A | WO 99 28158 A (SIEMENS AG ;SWART MARTEN (DE)) 10 juin 1999 (1999-06-10) * le document en entier * ----- | 1-3,6-13 | |

**DOMAINES TECHNIQUES RECHERCHES (Int.Cl.7)**

B60R
H01R

Le présent rapport a été établi pour toutes les revendications

| Lieu de la recherche | Date d'achèvement de la recherche | Examinateur |
|---|---|---|
| LA HAYE | 22 janvier 2004 | Geyer, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**

EP 03 29 2509

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2004

| Document brevet cité au rapport de recherche | | Date de publication | Membre(s) de la famille de brevet(s) | | Date de publication |
|---|---|---|---|---|---|
| US 5515399 | A | 07-05-1996 | EP | 0616924 A1 | 28-09-1994 |
| | | | DE | 59304677 D1 | 16-01-1997 |
| | | | JP | 2666881 B2 | 22-10-1997 |
| | | | JP | 7075266 A | 17-03-1995 |
| US 6091779 | A | 18-07-2000 | DE | 19653522 A1 | 25-06-1998 |
| | | | EP | 0849121 A1 | 24-06-1998 |
| | | | JP | 10215208 A | 11-08-1998 |
| US 6121692 | A | 19-09-2000 | CA | 2318596 A1 | 14-03-2001 |
| | | | EP | 1084910 A2 | 21-03-2001 |
| WO 9928158 | A | 10-06-1999 | DE | 19753467 A1 | 19-08-1999 |
| | | | WO | 9928158 A1 | 10-06-1999 |
| | | | EP | 1034094 A1 | 13-09-2000 |
| | | | JP | 2001524413 T | 04-12-2001 |

EPO FORM P0460